# EUROPEAN PATENT APPLICATION

(11) **EP 2 645 141 A2**
(43) Date of publication of application: **02.10.2013**
(21) Application number: 13155392.7
(22) Date of filing: 15.02.2013
(51) Int. Cl.: G02B 6/42, G02B 6/27

(54) **Optical transmitter, optical module, and optical connector**

(30) Priority: 30.03.2012 JP 2012082316
(71) Applicant: Fujitsu Limited, Kawasaki-shi, Kanagawa 211-8588 (JP)
(72) Inventor: Fukui, Shinsuke, Kanagawa 211-8588 (JP); Ohtani, Toshihiro, Kanagawa 211-8588 (JP)
(74) Representative: HOFFMANN EITLE

(57) **Abstract**

An optical transmitter includes an optical isolator that includes a Faraday rotator transmitting light output from a light source, and has a first state in which the light is transmitted through the optical isolator when a first magnetic field is applied to the Faraday rotator, and a second state in which the amount of the light transmitted through the optical isolator is less than that in the first state when a second magnetic field different from the first magnetic field is applied to the Faraday rotator; a junction to which an optical transmission medium into which the light output from the optical isolator is input is connected; a magnetic-field generator that selectively applies the first magnetic field or the second magnetic field to the Faraday rotator; and a switching unit that switches the magnetic-field generator to the second state when the optical transmission medium is not connected to the junction.

## Description

### FIELD

The embodiments discussed herein are related to an optical transmitter, an optical module, and an optical connector.

### BACKGROUND

Optical isolators with a Faraday rotator are conventionally used in optical transmitters such as a transmitter optical subassembly (TOSA). For example, the optical isolator is used to transmit therethrough light output from a light source such as a laser diode (LD) and attenuate a return light such as a reflected light. For the optical isolator with the Faraday rotator, it is conventionally known to adjust the Faraday rotation angle that fluctuates according to the wavelength and/or the temperature, by finely adjusting the magnetic field by a movable magnet. For example, refer to Japanese Laid-open Patent Publication No. H03-140904

However, the conventional technology described is dangerous in that the light from the light source is output to the outside if the light source is driven with no optical fiber being connected to the optical transmitter.

### SUMMARY

It is an object in one aspect of the embodiments to at least solve the above problems in the conventional technologies.

According to an aspect of an embodiment, an optical transmitter, an optical module, and an optical connector include an optical isolator that includes a Faraday rotator that transmits therethrough light output from a light source, and has a first state in which the light is transmitted through the optical isolator when a first magnetic field is applied to the Faraday rotator, and a second state in which the amount of the light transmitted through the optical isolator is less than that in the first state when a second magnetic field different from the first magnetic field is applied to the Faraday rotator; a junction to which an optical transmission medium into which the light output from the optical isolator is input is connected; a magnetic-field generator that selectively applies the first magnetic field or the second magnetic field to the Faraday rotator; and a switching unit that switches the magnetic-field generator to the second state when the optical transmission medium is not connected to the junction.

According to an aspect of the present invention, the safety can be enhanced.

### BRIEF DESCRIPTION OF DRAWINGS

FIG. 1 is a cross sectional view (part 1) of a configuration example of an optical transmitter according to a first embodiment;
FIG. 2 is a top view of the optical transmitter depicted in FIG. 1;
FIG. 3 is a cross sectional view (part 2) of the configuration example of the optical transmitter according to the first embodiment;
FIG. 4 is a diagram of an example of the operation of the optical transmitter in the state depicted in FIG. 1;
FIG. 5 is a diagram of an example of the operation of the optical transmitter in the state depicted in FIG. 3;
FIG. 6 is a cross sectional view (part 1) of a configuration example of an optical transmitter according to a second embodiment;
FIG. 7 is a cross sectional view (part 2) of the configuration example of the optical transmitter according to the second embodiment;
FIG. 8 is a cross sectional view (part 1) of a configuration example of an optical transmitter according to a third embodiment;
FIG. 9 is a cross sectional view (part 2) of the configuration example of the optical transmitter according to the third embodiment;
FIG. 10 is a diagram of an example of the operation of the optical transmitter in the state depicted in FIG. 8;
FIG. 11 is a cross sectional view (part 1) of a configuration example of an optical connector according to a fourth embodiment;
FIG. 12 is a cross sectional view (part 2) of the configuration example of the optical connector according to the fourth embodiment;
FIG. 13 is a cross sectional view (part 1) of a configuration example of an optical connector according to a fifth embodiment;
FIG. 14 is a cross sectional view (part 2) of the configuration example of the optical connector according to the fifth embodiment;
FIG. 15 is a diagram of a first example of an application of the optical connector;
FIG. 16 is a diagram of a second example of an application of the optical connector;
FIG. 17 is a cross sectional view (part 1) of a configuration example of an optical transmitter according to a sixth embodiment; and
FIG. 18 is a cross sectional view (part 2) of the configuration example of the optical transmitter according to the sixth embodiment.

### DESCRIPTION OF EMBODIMENTS

Embodiments of an optical transmitter, an optical module, and an optical connector according to the present invention are described in detail below with reference to the accompanying drawings.

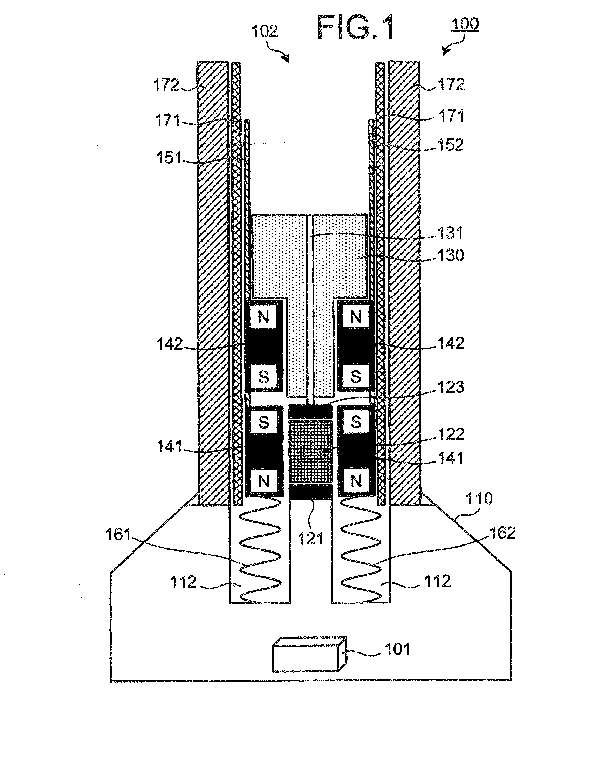

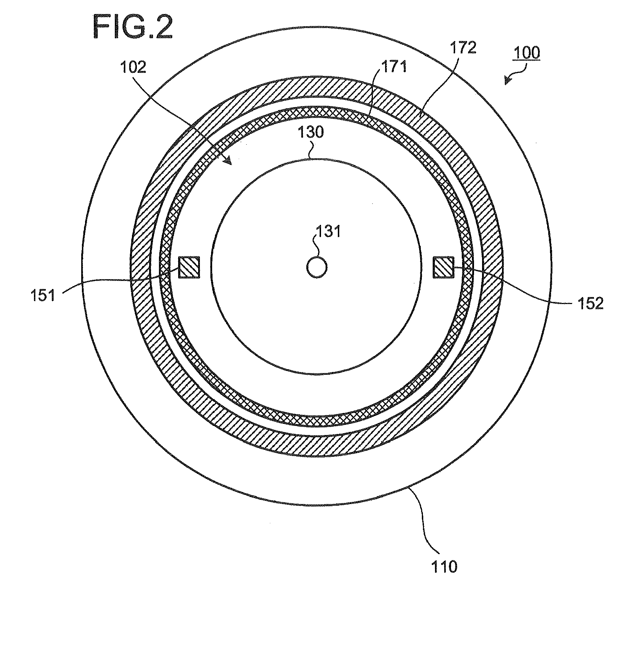

FIG. 1 is a cross sectional view (part 1) of a configuration example of an optical transmitter according to a first embodiment. FIG. 2 is a top view of the optical transmitter depicted in FIG. 1. An optical transmitter 100 depicted in FIGs. 1 and 2 is a receptacle-type optical transmitter that has a receptacle 102, which is an opening for attaching/detaching an optical transmission medium such as an optical fiber, and transmits light to the optical transmission medium inserted in the receptacle 102. FIG. 2 is a top view of the optical transmitter 100 depicted in FIG. 1 seen from the direction in which the optical transmitter 100 outputs the light. The receptacle 102 can be of various types such as LC type, SC type, MU type, and FC type.

The optical transmitter 100 according to the first embodiment includes a casing 110, a polarizer 121, a Faraday rotator 122, a polarizer 123, an internal ferrule 130, magnets 141 and 142, poles 151 and 152 for moving the magnets (hereinafter, "poles"), springs 161 and 162, a sleeve 171, and a sleeve casing 172.

The casing 110 includes an LD 101 that is a light source that oscillates and outputs light such as laser light. The casing 110 has an outlet for outputting the light from the LD 101 to the outside of the casing 110. The casing 110 has a housing 112 for accommodating the springs 161 and 162 outside the casing 110.

The light output from the LD 101 is input into the polarizer 121 that is an element capable of extracting a given linear polarization component from the light (the same applies to the polarizer 123). The polarizer 121 transmits therethrough light included in the input light and having a given polarization direction (first polarization direction). For convenience of description, the polarizer is called "first polarizer" in the present specification. The light transmitted through the polarizer 121 is input into the Faraday rotator 122.

The Faraday rotator 122 rotates the polarization plane (polarization direction) of the light output from the polarizer 121 according to the direction of magnetic field applied to the Faraday rotator 122. The Faraday rotator 122 rotates the polarization plane and outputs the rotated light to the polarizer 123. For example, garnet can be used as the Faraday rotator 122.

The light output from the Faraday rotator 122 is input into the polarizer 123 that transmits light included in the input light and having a given polarization direction (second polarization direction). For convenience of description, the polarizer is called "second polarizer" in the present specification. The polarization direction of the light transmitted by the polarizer 123 is different from the polarization direction of the light transmitted by the polarizer 121 by +45°, for example. The light transmitted through the polarizer 123 is output to an optical fiber 131 in the internal ferrule 130.

For example, the polarizer 121, the Faraday rotator 122, and the polarizer 123 are integrated into one, and fixed with respect to the casing 110 or the internal ferrule 130 that is fixed with respect to the sleeve 171. The optical fiber 131 is fixed in the internal ferrule 130, and transmits the light from the polarizer 123 and outputs the light to the outside of the optical transmitter 100.

Each of the magnets 141 and 142 is a cylindrical magnet having an opening for inserting the polarizer 121 or a portion of the optical fiber 131. The magnets 141 and 142 are held by the poles 151 and 152, and function as a magnetic-field generator that can be displaced, according to the movement of the poles 151 and 152, in the direction in which the light from the LD 101 transmits. The poles 151 and 152 function as a holding member that holds the magnets 141 and 142 and is displaced accompanying the attachment/detachment of the optical transmission medium 310 to/from the receptacle 102.

The north pole of the magnet 141 is on the side of the LD 101, and the south pole is on the side of the receptacle 102. For convenience of description, the magnet 141 is called "second magnet" in the present specification. When being close to the Faraday rotator 122, the magnet 141 applies magnetic field (second magnetic field) in the direction in which the light from the LD 101 transmits. The south pole of the magnet 142 is on the side of the LD 101, and the north pole is on the side of the receptacle 102. For convenience of description, the magnet 142 is called "first magnet" in the present specification. When being close to the Faraday rotator 122, the magnet 142 applies magnetic field (first magnetic field) in the direction opposite to the direction in which the light from the LD 101 transmits.

The springs 161 and 162 are provided between the magnet 141 and the bottom of the housing 112. Thus, in the state depicted in FIG. 1, the magnets 141 and 142 are located such that the magnet 141 surrounds the Faraday rotator 122. As a result, the magnetic field is applied to the Faraday rotator 122 by the nearby magnet 141 in the direction in which the light from the LD 101 transmits.

The sleeve 171 is a cylindrical member that surrounds the polarizer 121, the Faraday rotator 122, the polarizer 123, the optical fiber 131, the magnets 141 and 142, and the poles 151 and 152. The sleeve casing 172 is a cylindrical casing that surrounds the sleeve 171. The space surrounded by the internal ferrule 130 and the sleeve 171 is the receptacle 102.

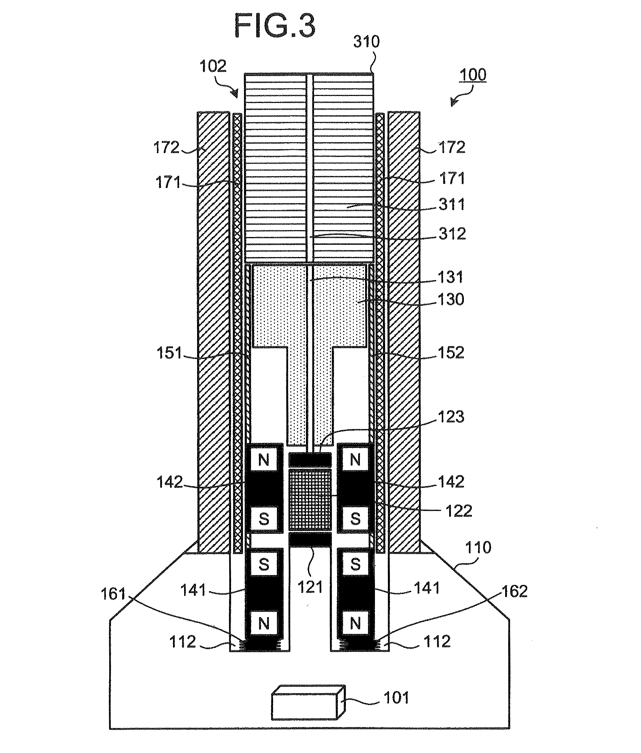

FIG. 3 is a cross sectional view (part 2) of the configuration example of the optical transmitter according to the first embodiment. Components in FIG. 3 similar to those depicted in FIG. 1 are assigned the same signs used in FIG. 3, and description thereof is omitted. In the state depicted in FIG. 3, an optical transmission medium 310 is inserted in the receptacle 102 of the optical transmitter 100. The optical transmission medium 310 is an optical transmission medium that transmits light by an optical fiber 312. A ferrule 311 is a ferrule at the end of the optical transmission medium 310. The optical fiber 312 is an optical fiber fixed to the ferrule 311.

The poles 151 and 152 are pushed towards the LD 101 by the optical transmission medium 310 inserted into the receptacle 102. As a result, the magnets 141 and 142 are located such that the magnet 142 surrounds the Faraday rotator 122. Thus, the magnetic field is applied to the Faraday rotator 122 by the magnet 142 in the direction opposite to the direction in which the light from the LD 101 transmits.

The magnet 141 is pushed into the housing 112. As a result, the springs 161 and 162 contract and the magnets 141 and 142 and the poles 151 and 152 are biased toward the side opposite to the LD 101. Thus, the springs 161 and 162 extend and the state depicted in FIG. 1 is returned to when the optical transmission medium 310 is detached from the receptacle 102.

Thus, the poles 151 and 152 (switching unit) bring the magnet 142 close to the Faraday rotator 122 and move the magnet 141 away from the Faraday rotator 122 when the optical transmission medium 310 is connected to the receptacle 102 (see FIG. 3), which is called "first state." On the other hand, the poles 151 and 152 move the magnet 142 away from the Faraday rotator 122 and bring the magnet 141 close to the Faraday rotator 122 when the optical transmission medium 310 is not connected to the receptacle 102 (see FIG. 1), which is called "second state."

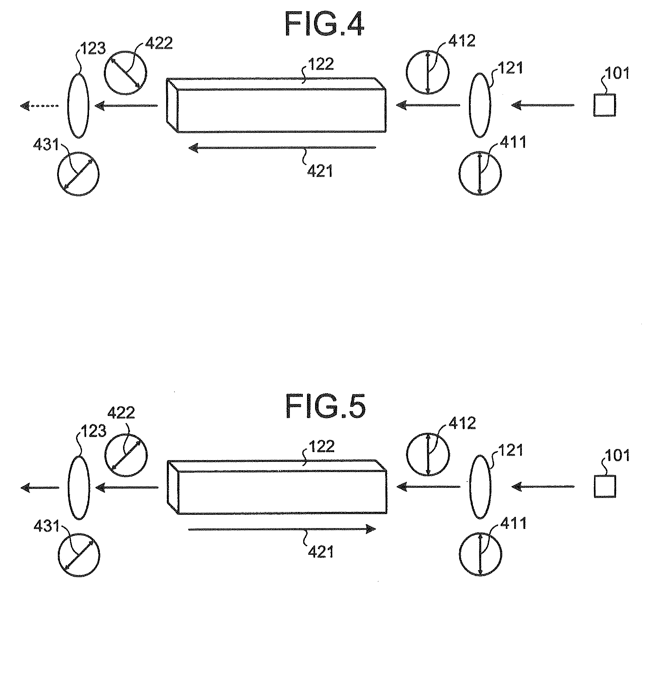

FIG. 4 is a diagram of an example of the operation of the optical transmitter in the state depicted in FIG. 1. Components in FIG. 4 similar to those depicted in FIG. 1 are assigned the same signs used in FIG. 1, and description thereof is omitted. A polarization direction 411 indicates the polarization direction (first polarization direction) of the light transmitted by the polarizer 121 that transmits to the Faraday rotator 122, light included in the light from the LD 101 and having the polarization direction 411. A polarization direction 412 indicates the polarization direction of the light output to the Faraday rotator 122.

If the LD 101 outputs a linearly polarized light, the loss of the light from the LD 101 caused at the polarizer 121 can be suppressed by designing the polarization direction of the light output from the LD 101 coincides with the polarization direction 412.

The direction 421 of magnetic field indicates the direction of the magnetic field applied to the Faraday rotator 122. In the state depicted in FIG. 1, the magnet 141 is located close to the Faraday rotator 122 since the optical transmission medium 310 is not inserted in the receptacle 102.

Thus, as indicated by the direction 421 of the magnetic field, the Faraday rotator 122 is applied the magnetic field in the direction in which the light from the LD 101 transmits. As a result, the Faraday rotator 122 rotates the polarization plane of the light input from the polarizer 121 by -45°. A polarization direction 422 indicates the polarization direction in which the light is output to the polarizer 123.

A polarization direction 431 indicates the polarization direction (second polarization direction) of the light transmitted by the polarizer 123 that transmits light included in the light from the Faraday rotator 122 and having the polarization direction 431, and outputs the light to the internal ferrule 130 (see FIG. 1). In the example depicted in FIG. 4, the polarization direction 422 of the light input into the polarizer 123 is orthogonal to the polarization direction 431 of the light transmitted by the polarizer 123.

Thus, emission of the light to the internal ferrule 130 is mostly blocked. Thus, leak of the light can be suppressed even when the light is output from the LD 101 without the optical transmission medium 310 being inserted in the receptacle 102.

Thus, leak of the light can be suppressed even when the LD 101 is driven without the optical transmission medium 310 being inserted in the receptacle 102 of the optical transmitter 100 that, for example, has been mounted on the board but is not in-use or is being mounted on the board. As a result, for example, the light from the LD 101 is prevented from causing bodily harm (for example, eyes and skin) and/or from stinging/burning an external object, thereby enhancing safety.

FIG. 5 is a diagram of an example of the operation of the optical transmitter in the state depicted in FIG. 3. Components in FIG. 5 similar to those depicted in FIG. 4 are assigned the same signs used in FIG. 4, and description thereof is omitted. In the state depicted in FIG. 3, the magnet 142 is located close to the Faraday rotator 122 since the optical transmission medium 310 is inserted in the receptacle 102.

Thus, as indicated by the direction 421 of the magnetic field, the Faraday rotator 122 is applied the magnetic field in the direction opposite to the direction in which the light from the LD 101 transmits. As a result, the Faraday rotator 122 rotates the polarization plane of the light input from the polarizer 121 by +45°.

In the example depicted in FIG. 5, the polarization direction 422 of the light input into the polarizer 123 coincides with the polarization direction 431 of the light transmitted by the polarizer 123. As a result, the light from the Faraday rotator 122 is output to the internal ferrule 130 with almost no attenuation. Thus, the light from the LD 101 is output to the internal ferrule 130 without almost no attenuation when the optical transmission medium 310 is inserted in the receptacle 102 as depicted in FIG. 3.

On the other hand, light (reflected light, for example) input into the polarizer 123 from the side of the optical transmission medium 310 and having the polarization direction 422 is input into the Faraday rotator 122 by the polarizer 123. The light input from the polarizer 123 into the Faraday rotator 122 is input into the polarizer 121, with the polarization plane thereof being rotated by the Faraday rotator 122 by +45°. As a result, the light input from the Faraday rotator 122 into the polarizer 121 is mostly blocked by the polarizer 121 since the polarization direction of the light is orthogonal to the polarization direction 411.

As described, the polarizer 121, the Faraday rotator 122, and the polarizer 123 function as an optical isolator when the optical transmission medium 310 is inserted in the receptacle 102 (i.e., during the operation of the optical transmitter 100). Thus, the light from the LD 101 to the optical transmission medium 310 is allowed to transmit, while the light from the optical transmission medium 310 to the LD 101 is not allowed to transmit.

As described, according to the first embodiment, the polarizer 121, the Faraday rotator 122, and the polarizer 123 function as an optical isolator when the optical transmission medium 310 is inserted in the receptacle 102. When the optical transmission medium 310 is not inserted in the receptacle 102, leak of the light can be suppressed even when the light is output from the LD 101.

During detachment of the optical transmission medium 310 from the receptacle 102, the state starts to change such that the leak of the light becomes smaller as the optical transmission medium 310 leaves from the receptacle 102. Thus, the leak of the light can be suppressed before the optical transmission medium 310 is completely detached from the receptacle 102, thereby absolutely preventing a harmful effect of the leak of the light from the receptacle 102 to a human body.

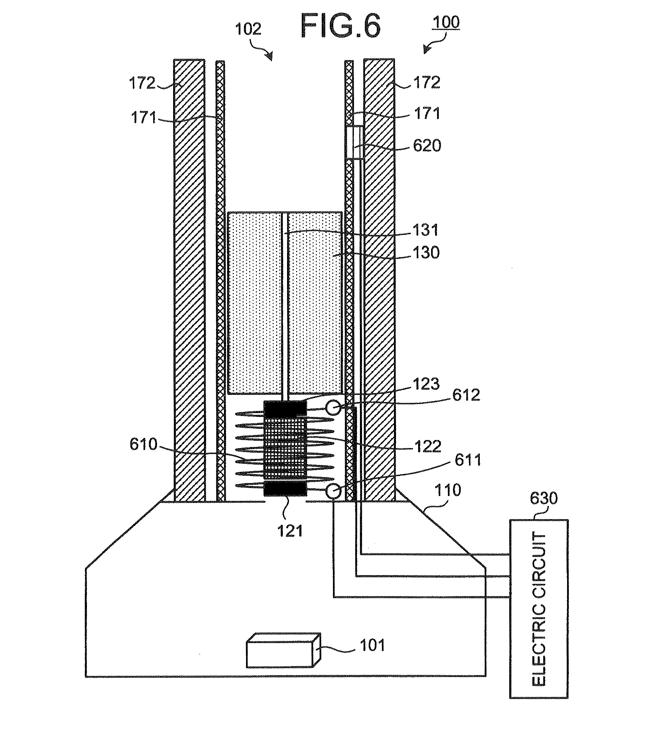

FIG. 6 is a cross sectional view (part 1) of a configuration example of an optical transmitter according to a second embodiment. Components in FIG. 6 similar to those depicted in FIGs. 1 to 3 are assigned the same signs used in FIGs. 1 to 3, and description thereof is omitted. As depicted in FIG. 6, the optical transmitter 100 according to the second embodiment includes the casing 110, the polarizer 121, the Faraday rotator 122, the polarizer 123, the internal ferrule 130, the sleeve 171, the sleeve casing 172, a coil 610, an insertion detector 620, and an electric circuit 630.

For example, the polarizer 121, the Faraday rotator 122, and the polarizer 123 are fixed with respect to the casing 110 or the internal ferrule 130. The coil 610 is a magnetic-field generator that applies magnetic field to the Faraday rotator 122 when an electric current from the electric circuit 630 flows therethrough. For example, the coil 610 can be implemented with a helical electric wire formed to surround the Faraday rotator 122.

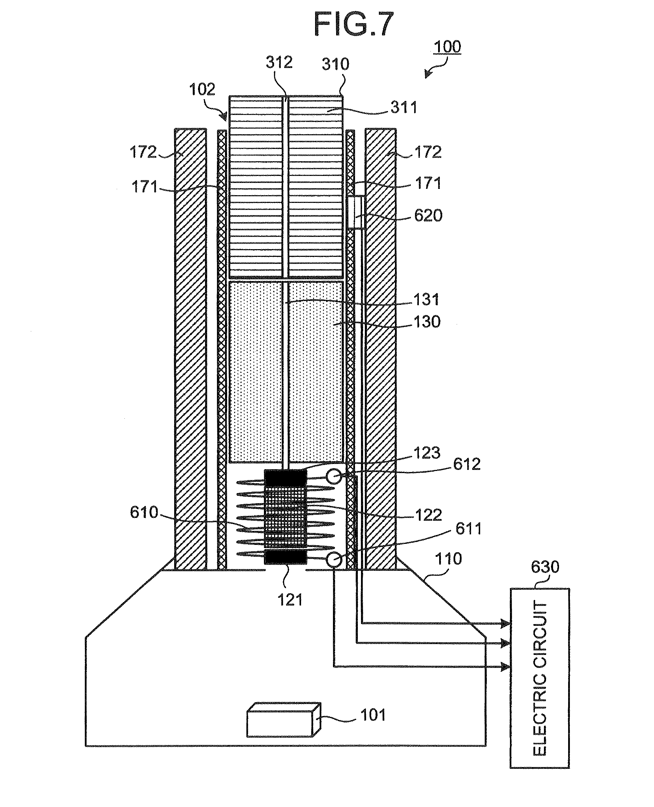

The insertion detector 620 detects whether the optical transmission medium 310 is inserted in the receptacle 102 (see FIG. 7), and outputs a signal indicating the result of the detection to the electric circuit 630. Various sensors can be used as the insertion detector 620. For example, the insertion detector 620 can be implemented with a photo detector (PD) that receives light incident on the inside of the sleeve 171 (for example, natural light). The PD can detect whether the optical transmission medium 310 is inserted since the light incident on the inside of the sleeve 171 is blocked when the optical transmission medium 310 is inserted in the receptacle 102. Alternatively, the insertion detector 620 may be implemented with a mechanical switch pushed by the optical transmission medium 310 inserted in the receptacle 102.

The electric circuit 630 is a power source circuit that causes an electric current to flow through the coil 610. The electric circuit 630 switches the direction of the electric current flowing through the coil 610 based on the signal output from the insertion detector 620 (the result of the detection). The electric circuit 630 can be implemented with various analog/digital circuits.

For example, the electric circuit 630 causes the electric current to flow through the coil 610 such that the Faraday rotator 122 is applied the magnetic field in the direction in which the light from the LD 101 transmits, when the optical transmission medium 310 is not inserted in the receptacle 102. On the other hand, the electric circuit 630 causes the electric current to flow through the coil 610 such that the Faraday rotator 122 is applied the magnetic field in the direction opposite to the direction in which the light from the LD 101 transmits, when the optical transmission medium 310 is inserted in the receptacle 102.

In the example depicted in FIG. 6, since the optical transmission medium 310 is not inserted in the receptacle 102, the electric circuit 630 causes an electric current (second electric current) to flow through the coil 610 such that the Faraday rotator 122 is applied the magnetic field in the direction in which the light from the LD 101 transmits. For example, the electric circuit 630 causes the electric current to flow from an end 611 of the coil 610 on the side of the LD 101 to the end 612 of the coil 610 on the side of the receptacle 102. As a result, the operation of the optical transmitter 100 becomes similar to that depicted in FIG. 4, and the leak of the light from the receptacle 102 can be suppressed.

FIG. 7 is a cross sectional view (part 2) of the configuration example of the optical transmitter according to the second embodiment. Components in FIG. 7 similar to those depicted in FIG. 6 are assigned the same signs used in FIG. 6, and description thereof is omitted. In the example depicted in FIG. 7, the electric circuit 630 causes an electric current (first electric current) to flow through the coil 610 such that the Faraday rotator 122 is applied the magnetic field in the direction opposite to the direction in which the light from the LD 101 transmits, since the optical transmission medium 310 is inserted in the receptacle 102.

In the example depicted in FIG. 7, the electric circuit 630 causes the electric current to flow from the end 612 of the coil 610 on the side of the receptacle 102 to the end 611 of the coil 610 on the side of the LD 101. As a result, the operation of the optical transmitter 100 becomes similar to that depicted in FIG. 5, and the light from the LD 101 is input into the optical fiber 312 while the light to the LD 101 from the side of the optical fiber 312 is mostly blocked.

The electric circuit 630 has been described to switch the direction of the electric current flowing through the coil 610. Alternatively, the electric circuit 630 may switch the magnitude of the electric current flowing through the coil 610. For example, when the optical transmission medium 310 is not inserted in the receptacle 102, the electric circuit 630 may cause to flow through the coil 610, an electric current (second electric current) smaller than that when the optical transmission medium 310 is inserted in the receptacle 102.

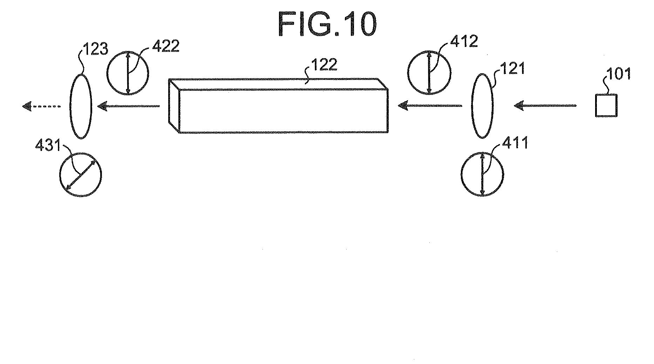

For example, the electric circuit 630 makes the electric current flowing through the coil 610 to zero when the optical transmission medium 310 is not inserted in the receptacle 102. As a result, almost no magnetic field is applied to the Faraday rotator 122 when the optical transmission medium 310 is not inserted in the receptacle 102. The operation in this case is similar to that depicted in FIG. 10 described later, and the light from the Faraday rotator 122 is attenuated and output by about 3dB.

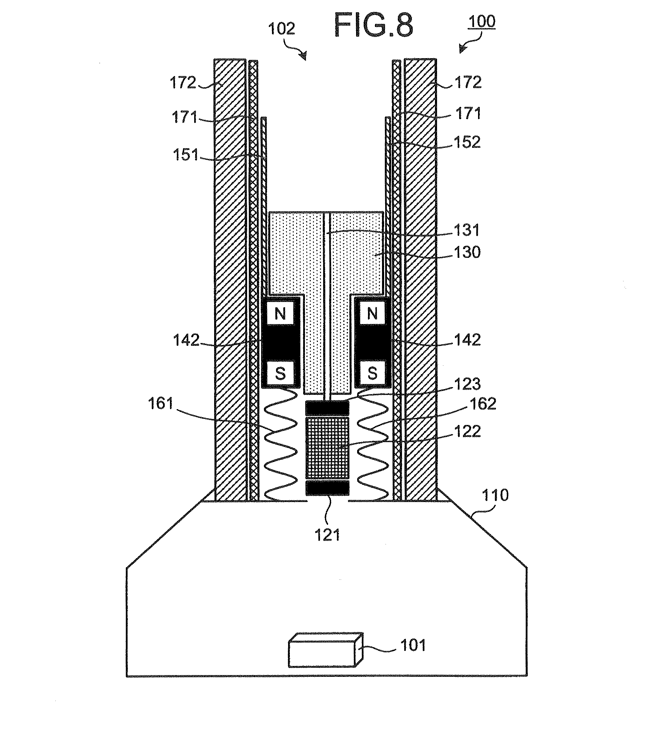

FIG. 8 is a cross sectional view (part 1) of a configuration example of an optical transmitter according to a third embodiment. Components in FIG. 8 similar to those depicted in FIGs. 1 to 3 are assigned the same signs used in FIGs. 1 to 3, and description thereof is omitted. As depicted in FIG. 8, the optical transmitter 100 may have the configuration same as those depicted in FIGs. 1 to 3, except that the magnet 141 is omitted. In this case, the casing 110 need not have the housing 112. The springs 161 and 162 are provided between the top of the casing 110 and the magnet 142.

In the state depicted in FIG. 8, the magnet 142 is located away from the Faraday rotator 122 since the optical transmission medium 310 is not inserted in the receptacle 102. Thus, the strength of the magnetic field (second magnetic field) applied to the Faraday rotator 122 is low.

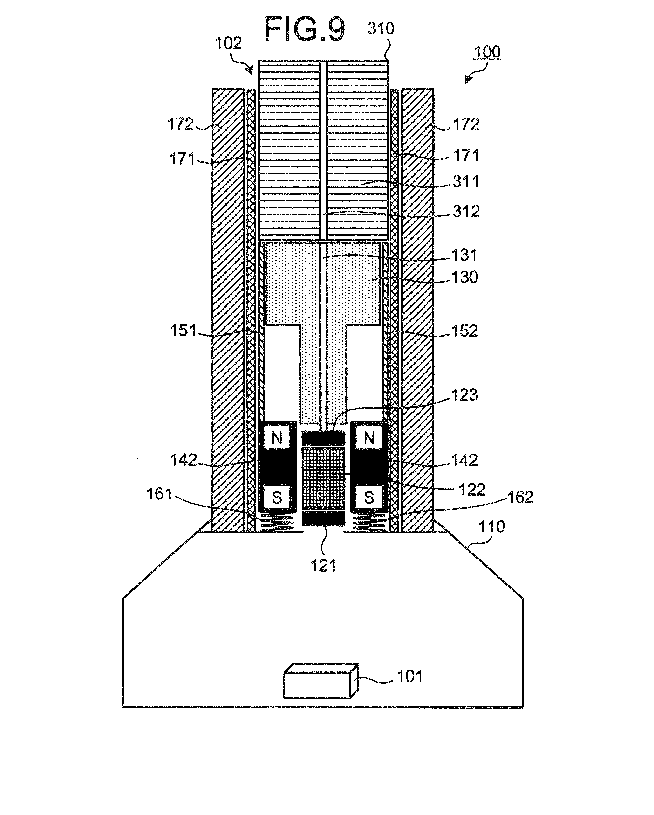

FIG. 9 is a cross sectional view (part 2) of the configuration example of the optical transmitter according to the third embodiment. Components in FIG. 9 similar to those depicted in FIG. 8 are assigned the same signs used in FIG. 8, and description thereof is omitted. In the state depicted in FIG. 9, the magnet 142 is located close to the Faraday rotator 122 since the optical transmission medium 310 is inserted in the receptacle 102. Thus, the magnetic field (first magnetic field) is applied to the Faraday rotator 122 by the magnet 142 in the direction opposite to the direction in which the light from the LD 101 transmits.

FIG. 10 is a diagram of an example of the operation of the optical transmitter in the state depicted in FIG. 8. Components in FIG. 10 similar to those depicted in FIGs. 4 and 5 are assigned the same signs used in FIGs. 4 and 5, and description thereof is omitted. In the state depicted in FIG. 8, the Faraday rotator 122 is located away from the magnet 142 since the optical transmission medium 310 is not inserted in the receptacle 102.

Thus, almost no magnetic field is applied to the Faraday rotator 122, and thus the polarization plane of the light input from the polarizer 121 is hardly rotated by the Faraday rotator 122 (here, the rotation amount is zero). As a result, the polarization direction 422 of the light input into the polarizer 123 is deviated from the polarization direction 431 of the light transmitted by the polarizer 123 by 45°.

As a result, the light from the Faraday rotator 122 is attenuated by about 3dB and output to the internal ferrule 130. Thus, the light from the LD 101 is attenuated and output when the optical transmission medium 310 is not inserted in the receptacle 102 as depicted in FIG. 8, thereby suppressing the leak of the light, preventing the light from harming a human body and/or an external object, and enhancing the safety.

The operation of the optical transmitter 100 in the state depicted in FIG. 9 is similar to that depicted in FIG. 5, and the light from the LD 101 is input into the optical fiber 312 while the light to the LD 101 from the side of the optical fiber 312 is mostly blocked.

As described, according to the third embodiment, the polarizer 121, the Faraday rotator 122, and the polarizer 123 function as an optical isolator when the optical transmission medium 310 is inserted in the receptacle 102. When the optical transmission medium 310 is not inserted in the receptacle 102, the leak of the light can be suppressed even when the light is output from the LD 101.

During detachment of the optical transmission medium 310 from the receptacle 102, the state starts to change such that the leak of the light becomes smaller as the optical transmission medium 310 leaves from the receptacle 102. Thus, the leak of the light can be suppressed before the optical transmission medium 310 is completely detached from the receptacle 102, thereby absolutely preventing a harmful effect of the leak of the light from the receptacle 102 to a human body.

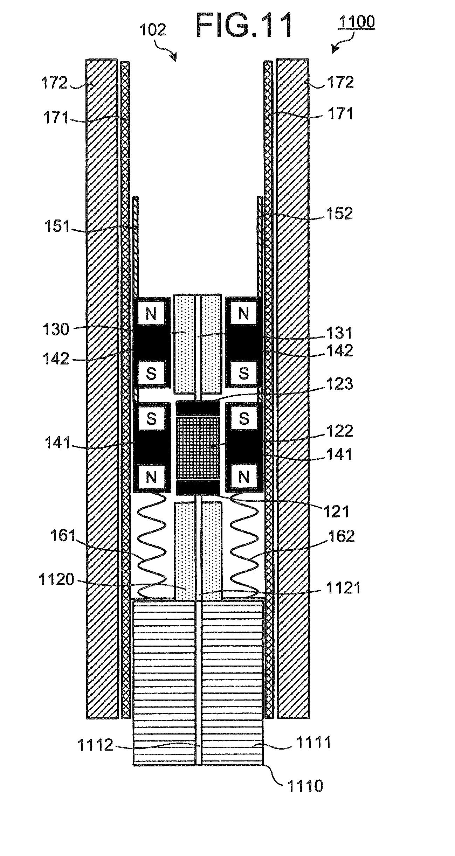

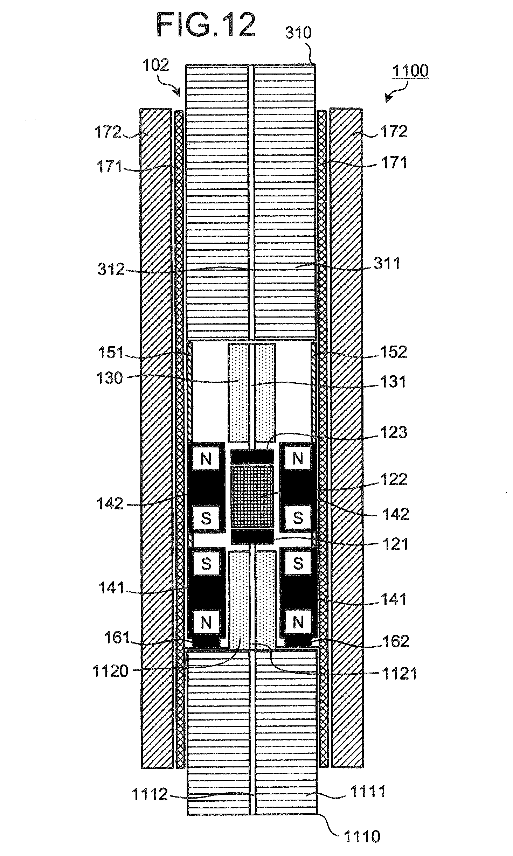

FIG. 11 is a cross sectional view (part 1) of a configuration example of an optical connector according to a fourth embodiment. Components in FIG. 11 similar to those depicted in FIGs. 1 to 3 are assigned the same signs used in FIGs. 1 to 3, and description thereof is omitted. An optical connector 1100 according to the fourth embodiment is an optical connector that connects the optical transmission medium 310 (see FIG. 12) and an optical transmission medium 1110.

As depicted in FIG. 11, the optical connector 1100 includes the polarizer 121, the Faraday rotator 122, the polarizer 123, the internal ferrule 130, the magnets 141 and 142, the poles 151 and 152, the springs 161 and 162, the sleeve 171, the sleeve casing 172, and an internal ferrule 1120.

A ferrule 1111 is a ferrule at the end of the optical transmission medium 1110, and fixed with respect to the sleeve 171. An optical fiber 1112 is fixed in the ferrule 1111, and transmits light from the outside of the optical connector 1100 and outputs the light to an optical fiber 1121.

For example, the internal ferrule 1120 is fixed with respect to the ferrule 1111. The optical fiber 1121 is fixed in the internal ferrule 1120, and transmits light from the optical fiber 1112 and outputs the light to the polarizer 121. The springs 161 and 162 are provided between the magnet 141 and the ferrule 1111.

In the state depicted in FIG. 11, the magnet 141 is located close to the Faraday rotator 122 since the optical transmission medium 310 is not inserted in the receptacle 102. As a result, the magnetic field is applied to the Faraday rotator 122 by the magnet 141 in the direction in which the light from the LD 101 transmits. Thus, the operation of the optical connector 1100 becomes similar to that depicted in FIG. 4, and the leak of the light from the receptacle 102 can be suppressed.

The junction of the optical connector 1100 and the optical transmission medium 1110 can be of various types, such as LC type, SC type, MU type, and FC type.

FIG. 12 is a cross sectional view (part 2) of the configuration example of the optical connector according to the fourth embodiment. Components in FIG. 12 similar to those depicted in FIG. 11 are assigned the same signs used in FIG. 11, and description thereof is omitted. In the state depicted in FIG. 12, the magnet 142 is located close to the Faraday rotator 122 since the optical transmission medium 310 is inserted in the receptacle 102.

As a result, the magnetic field is applied to the Faraday rotator 122 by the magnet 142 in the direction opposite to the direction in which the light from the LD 101 transmits. Thus, the operation of the optical connector 1100 becomes similar to that depicted in FIG. 5, and the light from the optical fiber 1112 is input into the optical fiber 312 while the light to the optical fiber 1112 from the side of the optical fiber 312 is mostly blocked.

As described, according to the fourth embodiment, the polarizer 121, the Faraday rotator 122, and the polarizer 123 function as an optical isolator when the optical transmission medium 310 is inserted in the receptacle 102. When the optical transmission medium 310 is not inserted in the receptacle 102, the leak of the light can be suppressed by blocking most of the light to the optical fiber 1112 from the side of the optical fiber 312.

During detachment of the optical transmission medium 310 from the receptacle 102, the state starts to change such that the leak of the light becomes smaller as the optical transmission medium 310 leaves from the receptacle 102. Thus, the leak of the light can be suppressed before the optical transmission medium 310 is completely detached from the receptacle 102, thereby absolutely preventing a harmful effect of the leak of the light from the receptacle 102 to a human body.

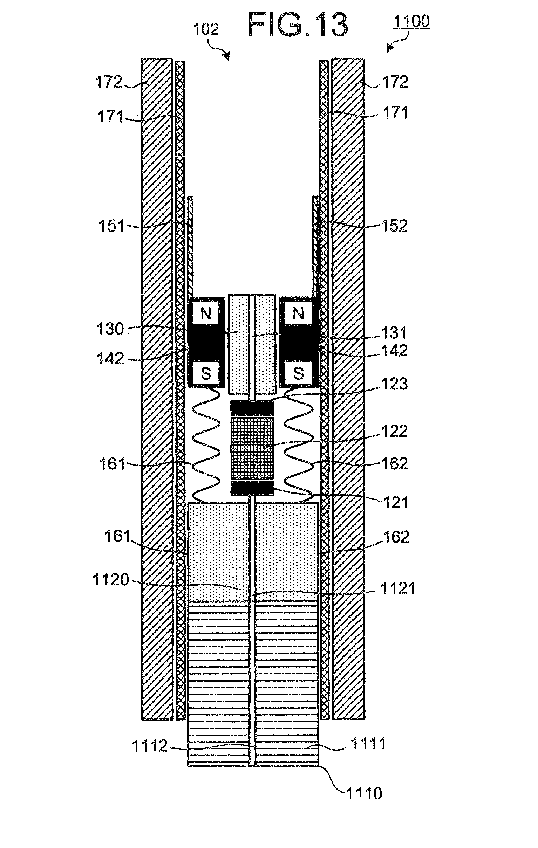

FIG. 13 is a cross sectional view (part 1) of a configuration example of an optical connector according to a fifth embodiment. Components in FIG. 13 similar to those depicted in FIGs. 11 and 12 are assigned the same signs used in FIGs. 11 and 12, and description thereof is omitted. As depicted in FIG. 13, the optical transmitter 100 may have the configuration same as those depicted in FIGs. 11 and 12, except that the magnet 141 is omitted. In this case, for example, the ferrule 1111 is provided so as to be in touch with the sleeve 171, and the springs 161 and 162 are provided between the top of the ferrule 1111 and the magnet 142.

In the state depicted in FIG. 13, the magnet 142 is located away from the Faraday rotator 122 since the optical transmission medium 310 is not inserted in the receptacle 102. As a result, the strength of the magnetic field applied to the Faraday rotator 122 is low. Thus, the operation of the optical connector 1100 in the state depicted in FIG. 13 becomes similar to that depicted in FIG. 10, and the light from the optical fiber 1121 is attenuated by about 3dB and output to the internal ferrule 130. Thus, the light from the LD 101 is attenuated and output when the optical transmission medium 310 is not inserted in the receptacle 102.

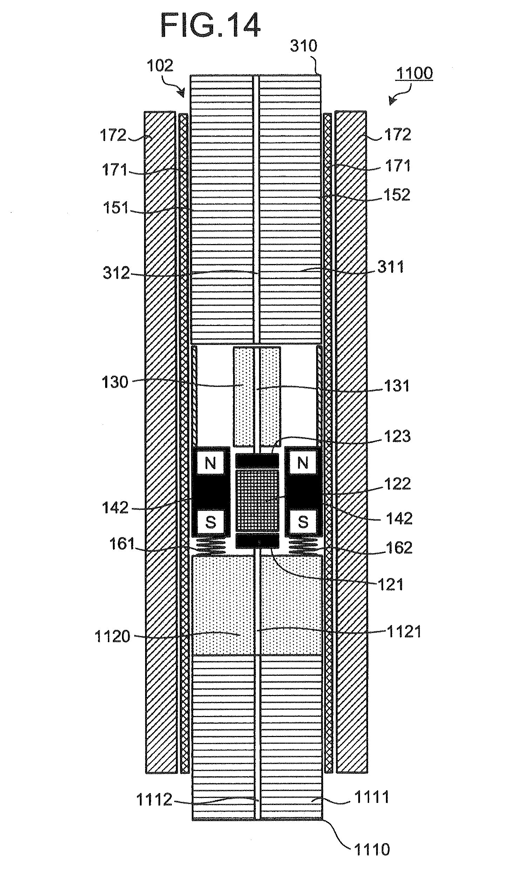

FIG. 14 is a cross sectional view (part 2) of the configuration example of the optical connector according to the fifth embodiment. Components in FIG. 14 similar to those depicted in FIG. 13 are assigned the same signs used in FIG. 13, and description thereof is omitted. In the state depicted in FIG. 14, the magnet 142 is located close to the Faraday rotator 122 since the optical transmission medium 310 is inserted in the receptacle 102.

As a result, the magnetic field is applied to the Faraday rotator 122 by the magnet 142 in the direction opposite to the direction in which the light from the LD 101 transmits. Thus, the operation of the optical transmitter 100 in the state depicted in FIG. 14 becomes similar to that depicted in FIG. 5, and the light from the optical fiber 1121 is input into the optical fiber 312 while the light to the optical fiber 1121 from the side of the optical fiber 312 is mostly blocked.

In FIGs. 11 to 14, configurations depicted in FIGs. 1 to 3, 8, and 9 are applied to the optical connector 1100. Alternatively, configurations depicted in FIGs. 6 and 7 may be applied to the optical connector 1100.

As described, according to the fifth embodiment, the polarizer 121, the Faraday rotator 122, and the polarizer 123 function as an optical isolator when the optical transmission medium 310 is inserted in the receptacle 102. When the optical transmission medium 310 is not inserted in the receptacle 102, the leak of the light can be suppressed by blocking most of the light to the optical fiber 1112 from the side of the optical fiber 312.

During detachment of the optical transmission medium 310 from the receptacle 102, the state starts to change such that the leak of the light becomes smaller as the optical transmission medium 310 leaves from the receptacle 102. Thus, the leak of the light can be suppressed before the optical transmission medium 310 is completely detached from the receptacle 102, thereby absolutely preventing a harmful effect of the leak of the light from the receptacle 102 to a human body.

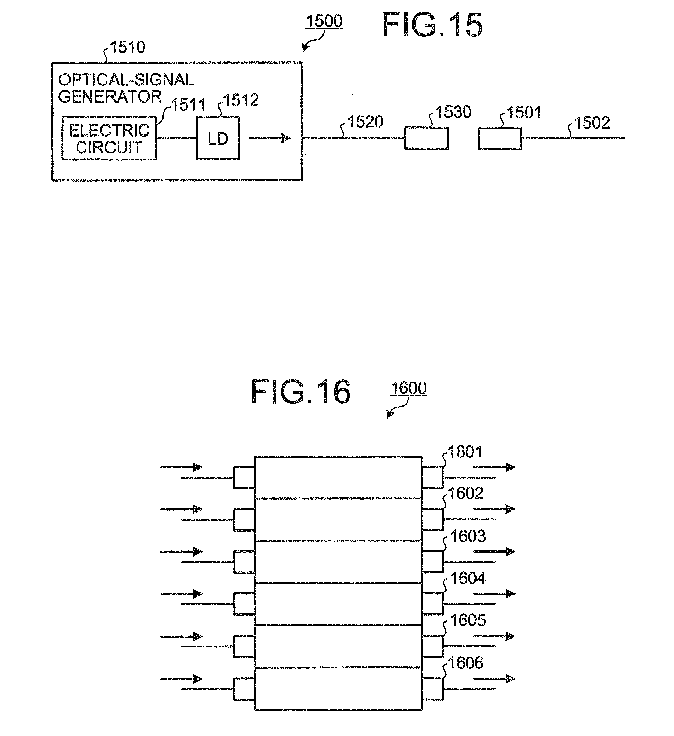

FIG. 15 is a diagram of a first example of an application of the optical connector. An optical module 1500 depicted in FIG. 15 includes an optical-signal generator 1510, an optical fiber 1520, and an optical connector 1530. The optical module 1500 is a pigtail optical module in which the optical fiber 1520 is guided from the casing of the optical-signal generator 1510, and the output end of the optical fiber 1520 is connected to the optical connector 1530.

The optical-signal generator 1510 includes an electric circuit 1511 and an LD 1512. The electric circuit 1511 can be implemented with various analog/digital circuits. The LD 1512 outputs an optical signal under control of the electric circuit 1511. The optical signal from the LD 1512 is output to the optical connector 1530 via the optical fiber 1520. The optical connector 1530 is an optical connector connectable to another optical connector 1501.

An optical fiber 1502 is connected to the optical connector 1501. The optical signal output from the optical fiber 1520 can be input into the optical fiber 1502 by connecting the optical connector 1530 to the optical connector 1501.

For example, the optical connector 1100 described (see FIGs. 11 to 14) can be applied to the optical connector 1530 depicted in FIG. 15. In this case, the optical transmission medium 1110 depicted in FIGs. 11 to 14 corresponds to the optical fiber 1520, and the optical transmission medium 310 depicted in FIGs. 11 to 14 corresponds to the optical connector 1501.

The optical connector 1530 can function as an optical isolator when being connected to the optical connector 1501, by applying the optical connector 1100 depicted in FIGs. 11 to 14 to the optical connector 1530. As a result, the optical signal output from the optical fiber 1520 is input into the optical fiber 1502 while the light from the optical fiber 1502 is prevented from being input into the LD 1512.

When the optical connector 1501 is not connected to the optical connector 1530, the light output from the optical fiber 1520 to the optical connector 1530 is blocked or attenuated, thereby suppressing the leak of the light from the optical connector 1530 to the outside.

FIG. 16 is a diagram of a second example of an application of the optical connector. An optical connector array 1600 depicted in FIG. 16 is an optical connector array in which optical connectors 1601 to 1606 are provided to form an array. For example, the optical connector 1100 depicted in FIGs. 11 to 14 can be applied to the optical connectors 1601 to 1606 depicted in FIG. 15.

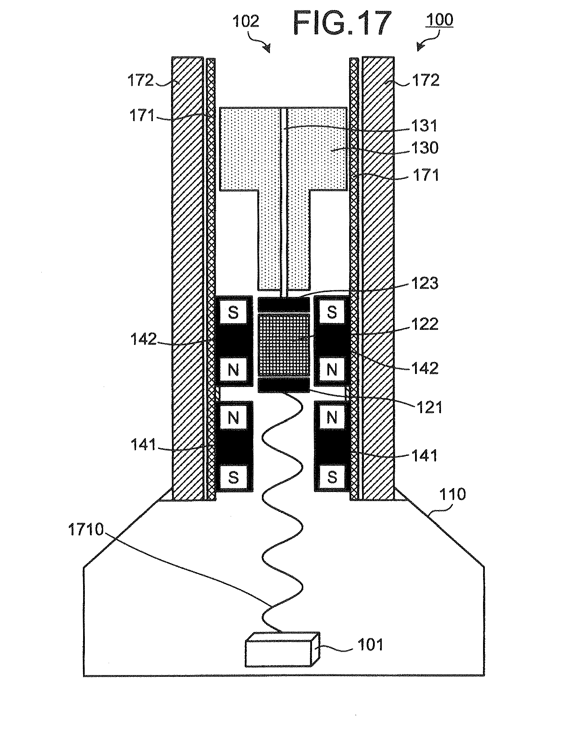

FIG. 17 is a cross sectional view (part 1) of a configuration example of an optical transmitter according to a sixth embodiment. Components in FIG. 17 similar to those depicted in FIGs. 1 to 3 are assigned the same sings, and description thereof is omitted. As depicted in FIG. 17, the optical transmitter 100 according to the sixth embodiment includes the casing 110, the polarizer 121, the Faraday rotator 122, the polarizer 123, the internal ferrule 130, the magnets 141 and 142, the sleeve 171, the sleeve casing 172, and a spring 1710. The magnets 141 and 142 are fixed in the sleeve 171.

The polarizer 121, the Faraday rotator 122, the polarizer 123, and the internal ferrule 130 are fixed to one another, and can be displaced in the direction in which the light from the LD 101 transmits. Thus, the internal ferrule 130 functions as a holding member to which the Faraday rotator 122 is fixed and that is displaced accompanying the attachment/detachment of the optical transmission medium 310 to/from the receptacle 102.

The spring 1710 is provided between the polarizer 121 and the LD 101 such that the spring 1710 does not block the light output from the LD 101 and input into the polarizer 121. For example, the spring 1710 is a helical spring formed to surround the optical path from the LD 101 to the polarizer 121. The magnets 141 and 142 are the same as those depicted in FIG. 1, except that the north pole and the south pole are interchanged.

In the state depicted in FIG. 17, the Faraday rotator 122 is located close to the magnet 142 since the optical transmission medium 310 is not inserted in the receptacle 102. As a result, the magnetic field is applied to the Faraday rotator 122 by the magnet 142 in the direction in which the light from the LD 101 transmits. Thus, the operation of the optical connector 1100 becomes similar to that depicted in FIG. 4, and the leak of the light from the receptacle 102 can be suppressed.

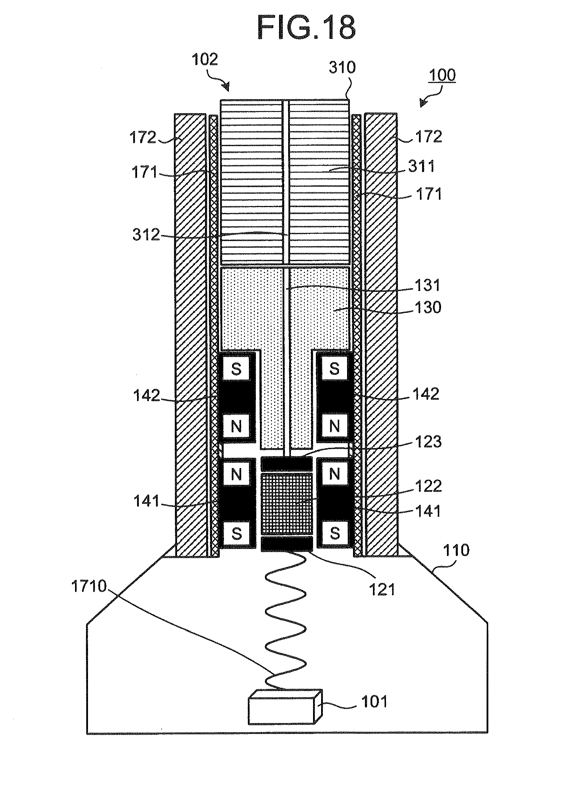

FIG. 18 is a cross sectional view (part 2) of the configuration example of the optical transmitter according to the sixth embodiment. Components in FIG. 18 similar to those depicted in FIG. 17 are assigned the same signs used in FIG. 17, and description thereof is omitted. In the state depicted in FIG. 18, the Faraday rotator 122 is located close to the magnet 141 since the optical transmission medium 310 is inserted in the receptacle 102.

As a result, the magnetic field is applied to the Faraday rotator 122 by the magnet 141 in the direction opposite to the direction in which the light from the LD 101 transmits. Thus, the operation of the optical connector 1100 becomes similar to that depicted in FIG. 5, and the light from the LD 101 is input into the optical fiber 312 while the light to the LD 101 from the side of the optical fiber 312 is mostly blocked.

Thus, the internal ferrule 130 and the spring 1710 (switching unit) move the Faraday rotator 122 close to the magnet 141 (first magnet) and away from the magnet 142 (second magnet) when the optical transmission medium 310 is connected to the receptacle 102. On the other hand, the internal ferrule 130 and the spring 1710 move the Faraday rotator 122 away from the magnet 141 and close to the magnet 142 when the optical transmission medium 310 is not connected to the receptacle 102.

As described, according to the embodiments, when the optical transmission medium 310 is connected to the receptacle 102, the first state is brought about in which the Faraday rotator 122 is applied the first magnetic field that allows to transmit the light from a light source such as the LD 101. On the other hand, when the optical transmission medium 310 is not connected to the receptacle 102, the second state is brought about in which the Faraday rotator 122 is applied the second magnetic field of a direction or strength different from that of the first magnetic field.

Thus, an optical isolator can be implemented when the optical transmission medium 310 is connected to the receptacle 102, and the leak of the light can be suppressed when the optical transmission medium 310 is not connected to the receptacle 102.

When the optical transmission medium 310 is connected, the leak of the light when the optical transmission medium 310 is not connected can be suppressed by the polarizer 121, the Faraday rotator 122, and the polarizer 123 functioning as an optical isolator. Thus, the LD 101 is prevented from affecting the external optical path when the optical transmission medium 310 is connected, and the leak of the light when the optical transmission medium 310 is not connected can be suppressed.

As described, the optical transmitter, the optical module, and the optical connector switch the magnetic field applied to the Faraday rotator in the isolator when the optical fiber is detached, thereby reducing, when the optical fiber is not connected, the amount of the laser light transmitted through the polarizer and the leak of the laser light, and thus enhancing the safety.

Various modification can be made for the embodiments described. For example, the magnet 142 may be rotated by 180° according to the attachment/detachment of the optical transmission medium 310 to/from the receptacle 102 in the configuration depicted in FIGs. 8 and 9. Thus, the direction of the magnetic field applied to the Faraday rotator 122 is switched, thereby achieving the same operation depicted in FIGs. 4 and 5.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. An optical transmitter (100) comprising:
an optical isolator (121, 122, 123) that includes a Faraday rotator (122) that transmits therethrough light output from a light source (101), and has
a first state in which the light is transmitted through the optical isolator when a first magnetic field is applied to the Faraday rotator, and
a second state in which the amount of the light transmitted through the optical isolator is less than that in the first state when a second magnetic field different from the first magnetic field is applied to the Faraday rotator;
a junction (102) to which an optical transmission medium (310) into which the light output from the optical isolator is input is connected;
a magnetic-field generator (141, 142; 610) that selectively applies the first magnetic field or the second magnetic field to the Faraday rotator; and
a switching unit (151, 152; 620, 630; 130, 1710) that switches the magnetic-field generator to the second state when the optical transmission medium is not connected to the junction.

2. An optical transmitter (100) comprising:
a first polarizer (121) that transmits therethrough light included in light output from a light source (101) and having the polarization plane of a first polarization direction;
a Faraday rotator (122) that rotates the polarization plane of the light that has been transmitted through the first polarizer according to magnetic field;
a second polarizer (123) that transmits therethrough light included in the light of which polarization plane has been rotated by the Faraday rotator and having a second polarization direction different from the first polarization direction;
a junction (102) to which an optical transmission medium (310) into which the light that has been transmitted through the second polarizer is input is connected;
a magnetic-field generator (141, 142; 610) that switches a first state and a second state, wherein in the first state a first magnetic field is applied to the Faraday rotator such that the polarization plane of the light that has been transmitted through the first polarizer is rotated from the first polarization direction to the second polarization direction, and in the second state in which a second magnetic field different from the first magnetic field is applied to the Faraday rotator; and
a switching unit (151, 152; 620, 630; 130, 1710) that switches the magnetic-field generator to the first state when the optical transmission medium is connected to the junction, and to the second state when the optical transmission medium is not connected to the junction.

3. The optical transmitter according to claim 2, wherein the second polarization direction is different from the first polarization direction by 45°.

4. The optical transmitter according to claim 2, wherein
the first magnetic field is a magnetic field having the direction opposite to the direction in which the light is transmitted through the Faraday rotator, and
the second magnetic field is a magnetic field having the direction opposite to that of the first magnetic field.

5. The optical transmitter according to claim 4, wherein
the magnetic-field generator includes a first magnet (142) and a second magnet (141) that can be displaced in the direction in which the light is transmitted through the Faraday rotator,
the first magnet (142) applies the first magnetic field to the Faraday rotator when being close to the Faraday rotator,
the second magnet (141) applies the second magnetic field to the Faraday rotator when being close to the Faraday rotator, and
the switching unit brings the first magnet (142) closer to the Faraday rotator than the second magnet (141) when the optical transmission medium is connected to the junction, and brings the second magnet (141) closer to the Faraday rotator than the first magnet (142) when the optical transmission medium is not connected to the junction.

6. The optical transmitter according to claim 5, wherein
the junction is a slot for attaching/detaching the optical transmission medium, and
the switching unit includes a holding member (151, 152) to which the first magnet (142) and the second magnet (141) are fixed and that displaces the first magnet and the second magnet accompanying the attachment/detachment of the optical transmission medium to/from the junction.

7. The optical transmitter according to claim 4, wherein
the magnetic-field generator is a coil (610) that applies the first magnetic field to the Faraday rotator when a first electric current flows therethrough, and applies the second magnetic field to the Faraday rotator when a second electric current having the direction opposite to that of the first electric current flows therethrough, and
the switching unit (620; 630) causes the first electric current to flow through the coil when the optical transmission medium is connected to the junction, and causes the second electric current to flow through the coil when the optical transmission medium is not connected to the junction.

8. The optical transmitter according to claim 7, wherein the switching unit includes:
a detector (620) that detects whether the optical transmission medium is connected to the junction, and
a power source circuit (630) that switches the direction of an electric current flowing through the coil based on a result of detection by the detector.

9. The optical transmitter according to claim 4, wherein
the magnetic-field generator includes:
a first magnet (141) that applies the first magnetic field to the Faraday rotator when the Faraday rotator comes close to the first magnet, and
a second magnet (142) that applies the second magnetic field to the Faraday rotator when the Faraday rotator comes close to the second magnet,
the Faraday rotator can be displaced in the direction in which the light is transmitted through the Faraday rotator, and
the switching unit (130, 1710) moves the Faraday rotator close to the first magnet (141) and away from the second magnet (142) when the optical transmission medium is connected to the junction, and moves the Faraday rotator away from the first magnet (141) and close to the second magnet (142) when the optical transmission medium is not connected to the junction.

10. The optical transmitter according to claim 9, wherein
the junction is a slot for attaching/detaching the optical transmission medium, and
the switching unit is a holding member (130) that holds the Faraday rotator and is displaced accompanying the attachment/detachment of the optical transmission medium to/from the junction.

11. The optical transmitter according to claim 1, wherein the second magnetic field is a magnetic field having the strength different from that of the first magnetic field.

12. The optical transmitter according to claim 11, wherein
the magnetic-field generator is a magnet (142) that can be displaced in the direction in which the light is transmitted through the Faraday rotator, and that applies the first magnetic field to the Faraday rotator when being close to the Faraday rotator and applies the second magnetic field having the strength lower than that of the first magnetic field to the Faraday rotator when being away from the Faraday rotator, and
the switching unit brings the magnet close to the Faraday rotator when the optical transmission medium is connected to the junction, and moves the magnet away from the Faraday rotator when the optical transmission medium is not connected to the junction.

13. The optical transmitter according to claim 11, wherein
the magnetic-field generator is a coil (610) that applies the first magnetic field to the Faraday rotator when a first electric current flows therethrough, and applies the second magnetic field having the strength lower than that of the first magnetic field to the Faraday rotator when a second electric current smaller than the first electric current flows therethrough, and
the switching unit (620, 630) causes the first electric current to flow through the coil when the optical transmission medium is connected to the junction, and causes the second electric current to flow through the coil when the optical transmission medium is not connected to the junction.

14. An optical module (1500) comprising:
an optical connecter (1530) located at an output end of an optical fiber (1520) that transmits light output from a light source (1510), wherein the optical connector includes:
a first polarizer (121) that transmits therethrough light included in the light that has been transmitted through the optical fiber and having the polarization plane of a first polarization direction;
a Faraday rotator (122) that rotates the polarization plane of the light that has been transmitted through the first polarizer according to magnetic field;
a second polarizer (123) that transmits therethrough light included in the light of which polarization plane has been rotated by the Faraday rotator and having a second polarization direction different from the first polarization direction;
a junction (102) to which an optical transmission medium (310) into which the light that has been transmitted through the second polarizer is input is connected;
a magnetic-field generator (141, 142) that switches a first state and a second state, wherein in the first state a first magnetic field is applied to the Faraday rotator such that the polarization plane of the light that has been transmitted through the first polarizer is rotated from the first polarization direction to the second polarization direction, and in the second state in which a second magnetic field different from the first magnetic field is applied to the Faraday rotator; and
a switching unit (151, 152) that switches the magnetic-field generator to the first state when the optical transmission medium is connected to the junction, and to the second state when the optical transmission medium is not connected to the junction.

15. An optical connector (1100) located at an output end of an optical fiber (1112) that transmits light output from a light source, the optical connector comprising:
an optical isolator (121, 122, 123) that includes a Faraday rotator (122) that transmits therethrough the light that has been transmitted through the optical fiber, and has
a first state in which the light is transmitted through the optical isolator when a first magnetic field is applied to the Faraday rotator, and
a second state in which the amount of the light transmitted through the optical isolator is less than that in the first state when a second magnetic field different from the first magnetic field is applied to the Faraday rotator;
a junction (102) to which an optical transmission medium (310) into which the light output from the optical isolator is input is connected;
a magnetic-field generator (141, 142) that selectively applies the first magnetic field or the second magnetic field to the Faraday rotator; and
a switching unit (151, 152) that controls, when the optical transmission medium is not connected to the junction, the magnetic-field generator to switch the state of the optical isolator to the second state.
